Europäisches Patentamt

European Patent Office

Office européen des brevets

(11) Publication number: **0 409 137 A2**

# EUROPEAN PATENT APPLICATION

(21) Application number: **90113604.4**

(22) Date of filing: **16.07.90**

(51) Int. Cl.5: **G01J 3/28**

(30) Priority: **17.07.89 JP 185629/89**
**30.03.90 JP 86830/90**

(43) Date of publication of application:
**23.01.91 Bulletin 91/04**

(84) Designated Contracting States:
**DE GB**

(71) Applicant: **SHIMADZU CORPORATION**
**1, Nishinokyo-Kuwabaracho**
**Nakagyo-ku Kyoto-shi Kyoto 604(JP)**

(72) Inventor: **Sato, Tatsumi**
**Enmeiji Furawahaitsu 302-C, 48-1 Toriimae,**
**Enmeiji**
**Oyamazakicho, Otokunigun, Kyoto(JP)**
Inventor: **Hurusawa, Kazuo**
**8-52 3-chome, Oharano Nishisakaidaicho**
**Nishikyo-ku, Kyoto-shi, Kyoto(JP)**

(74) Representative: **WILHELMS, KILIAN &**
**PARTNER Patentanwältelte**
**Eduard-Schmid-Strasse 2**
**D-8000 München 90(DE)**

(54) **Spectrophotometer.**

(57) A spectrophotometer permitting the operator to process obtained data in any desired manner without knowledge of computer programs. The spectrophotometer consists of a measuring section and a data-processing section. This data-processing section comprises a CPU, a keyboard for entering a desired mathematical expression, a memory storing the entered mathematical expression, a data memory storing data obtained from measurements, a CRT, and a printer. The mathematical expression is given by $y = f(x_1, x_2, \cdots, x_n)$, where $x_1, x_2, \cdots, x_n$ are data items obtained from measurements. The CPU substitutes collected data into the mathematical expression to perform desired calculations.

EP 0 409 137 A2

# SPECTROPHOTOMETER

## FIELD OF THE INVENTION

The present invention relates to a spectrophotometer which permits one who analyzes the data obtained from measurements to prepare and run a program used for the analysis by himself or herself.

## BACKGROUND OF THE INVENTION

Spectrophotometers capable of automatically measuring the transmittivity, the absorbance, the reflectivity, and other factors of a sample for one or more wavelengths of light have existed. Also, a spectrophotometer which incorporates plural programs for processing data on the results of measurements and which permits one to instruct measurements and indicate how to process the data has been proposed, as disclosed in Japanese Patent application No. 250323/1984.

With the spectrophotometer capable of processing data as described above, if it is desired to process data without using any one of the functions incorporated in the instrument, then the person who makes measurements performs calculations manually or with a desk-top computer from the photometric data delivered from the spectrophotometer; otherwise he or she prepares a program with a personal computer to process the data, sends the data obtained from measurements to the computer, and then executes the program, for processing the data.

When it is necessary to process data without using any one of the functions incorporated in a spectrophotometer, if the calculations are performed manually or using a desk-top computer, it is very cumbersome to perform the calculations. Furthermore, much labor is required to prepare tables or graphs from the results of processings, for making up a report on the results of analysis. Especially, when the number of samples is large, the time taken to process the results of measurements is much longer than the time taken to analyze the samples. This is quite inefficient. If a personal computer is used to process data, then none of the foregoing problems take place. However, only a limited number of persons are able to construct any desired program. If the construction of a program is entrusted to a professional's hand, then the cost is increased. Also, it is impossible to quickly cope with various demands for analysis.

Generally, a calibration curve is prepared to find the concentration of a sample from the absorbance, or the concentration is calculated from measured values. For these purposes, appropriate mathematical expressions are prepared, and then data obtained from measurements is substituted into the expressions. Since these general operations are frequently performed, if programs for these operations have been previously prepared by the manufacturer of the spectrophotometer and incorporated in the instrument, then it will be used with greater ease, even though various programs for processing data can be arbitrarily prepared and executed. If the same kind of sample is investigated by spectrophotometry, the central wavelength of the peak of the absorbance or transmittivity may shift, depending on the concentration of the component. In this case, if one or more fixed wavelengths are used for the measurements, then it is impossible to cope with the wavelength shift.

## SUMMARY OF THE INVENTION

In view of the foregoing problems, it is an object of the invention to provide a spectrophotometer which automatically processes data and permits a human analyzer to easily prepare various programs for the processing.

It is another object of the invention to provide a spectrophotometer which can automatically cope with a shift in each central wavelength of peaks as described above.

These objects are achieved by a spectrophotometer comprising: an input means for entering an arbitrary mathematical expression given by

$$y = f(x_1, x_2, \cdots, x_n)$$

where $x_1$, $x_2$, $\cdots$, $x_n$ are data items obtained from measurements; a means for storing the entered mathematical expression; an arithmetic means for performing calculations from collected data, using the mathematical expression; and a means for displaying the output from the arithmetic means.

In one embodiment of the invention, a second arithmetic means is added to the spectrophotometer to prepare a calibration curve and to calculate concentration from data obtained from measurements, using the calibration curve.

In another embodiment of the invention, one or more ranges of wavelengths have been previously set, and a detecting means is added to detect maximal or minimal values from the data which lie in the set ranges and are obtained from measurements. The detected values are used as the data items $x_1$, $x_2$, $\cdots$, $x_n$.

Measurements are made on a reference sample and samples to be investigated at wavelengths $\lambda_1$, $\lambda_2$, etc. The results of the measurements are given by $x_1$, $x_2$, $\cdots$, $x_n$. The data is processed to determine the function of the data derived from the measurements. Once the function is determined, the order in which various operations for measurements are performed and the timings at which the operations are performed can be calculated by the arithmetic function. The order of the operations is displayed on the display means. A human analyzer can make the analysis proceed, according to the displayed instructions. After the completion of collection of data from the measurements, the data is processed according to the mathematical expression and displayed on a display device. Therefore, the analyzer is not required to perform arithmetic operations by himself or herself or to prepare a report on the measurements. Since data can be processed in the form of a mathematical expression in the same way as entry of sentences, no labor is needed to prepare a program. Also, any knowledge of preparation of a program is unnecessary.

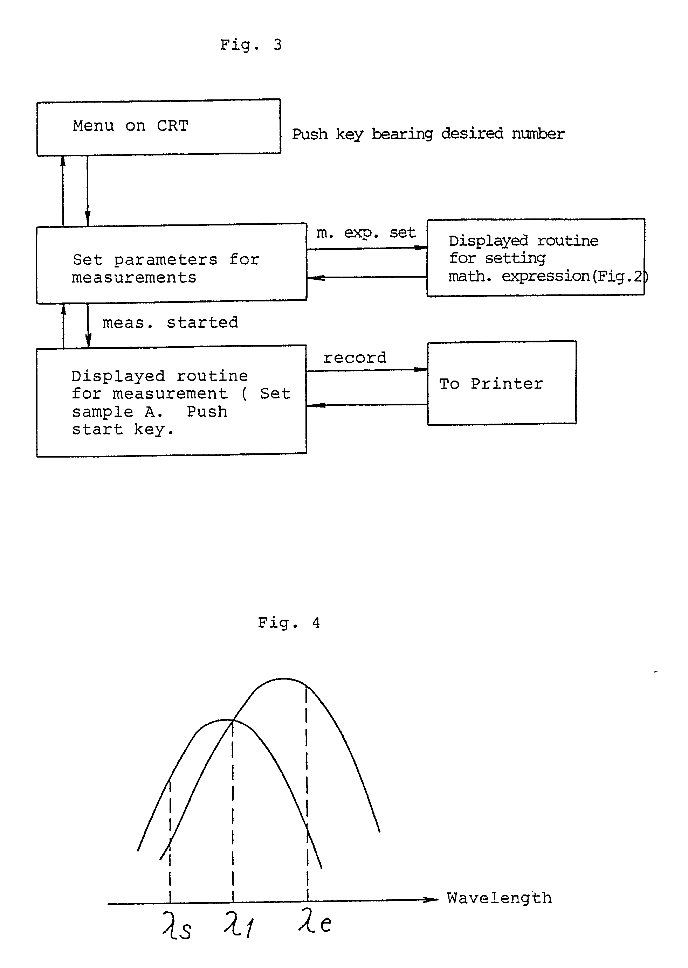

An operation for preparing a calibration curve and an operation for calculating concentration using the calibration curve are quite general and often employed. The spectrophotometer can be operated with greater ease by previously programming these operations into the instrument. Where the wavelength of the center of a peak shifts according to the concentration of a sample as shown in Fig. 4, if every measurement is made at only one wavelength $\lambda_1$, then neither the peak shift nor the change in the peak height can be detected. As a result, two samples might be regarded as identical in concentration. In accordance with the invention, the range of wavelengths is set between $\lambda_s$ and $\lambda_e$, for example, and the maximal values of measured data are detected. Hence, data about the correct centers of peaks can be obtained at all times.

Other objects and features of the invention will appear in the course of the description of thereof which follows.

## BRIEF DESCRIPTION OF THE DRAWINGS

Fig. 1 is a block diagram of a spectrophotometer according to the invention;
Fig. 2 is a diagram showing one example of display provided on the viewing screen of the CRT shown in Fig. 1;
Fig. 3 is a flowchart illustrating one example of operation performed by the spectrophotometer shown in Fig. 1:
Fig. 4 is a graph illustrating the need to scan wavelength; and
Fig. 5 is a flowchart illustrating the operation of the data-processing section of another spectrophotometer according to the invention.

## DETAILED DESCRIPTION OF THE INVENTION

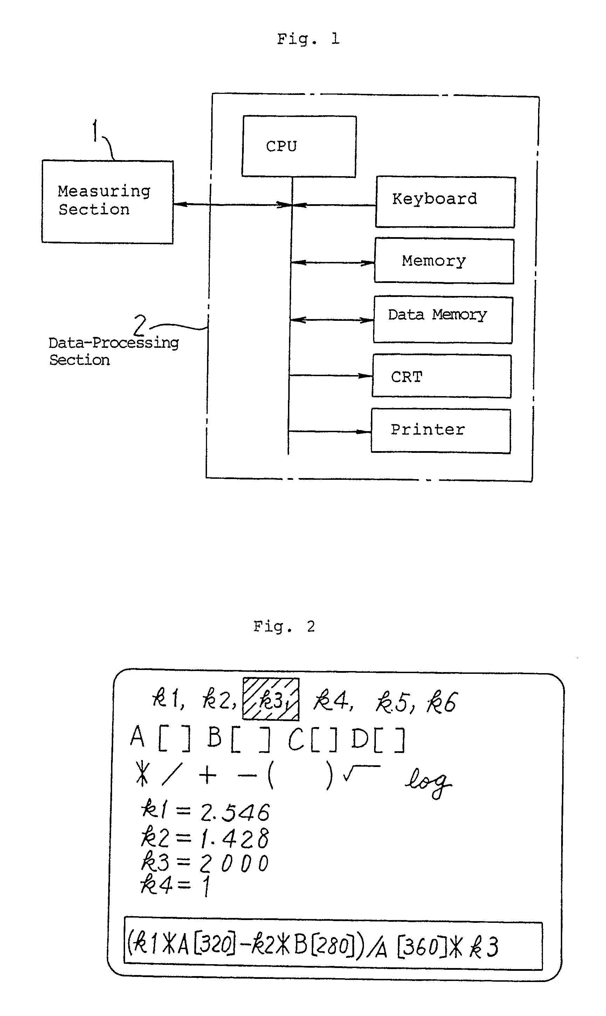

Referring to Fig. 1, there is shown a spectrophotometer according to the invention. This instrument comprises a measuring section 1 and a data-processing section 2. The data-processing section 2 comprises a CPU, a keyboard K for entering a mathematical expression, a memory CM storing the entered mathematical expression, a data memory DM storing data obtained from measurements, a CRT providing a display of the entered mathematical expression and various instructions, and a printer P for printing out the results of processing of data. In spectral analysis, wavelengths $\lambda_1$, $\lambda_2$, and so on are used. Let $x_1$, $x_2$, and so on express the data items derived from the measurements. If it is only necessary to print out the data, the entered mathematical expression is given by

$$y_i = x_i \quad (i = 1, 2, \cdots, n)$$

As an example, this spectrophotometer can be used to draw an absorption spectrum, for knowing the ratios of individual components of a mixture sample. In particular, let $\lambda_1$, $\lambda_2$, and so on be the central wavelengths of plural peaks of an absorption spectrum of the sample. $\lambda_1$, $\lambda_2$, etc. also give the wavelengths at which the absorbance assumes its minimal values. Let $x_1$, $x_2$, and so on be the values of absorbance at these wavelengths. When the concentration of a sample is determined with a calibration curve from data obtained from spectrophotometry using a single wavelength, the calibration curve is expressed by a mathematical expression. The concentration is given by

$y = A + B x + C x^2$

Let $x_1$, $x_2$, etc. be the output values obtained from samples $S_1$, $S_2$, etc. at wavelength $\lambda$. When a calibration curve is prepared using plural reference samples of known concentrations, let $x_1$, $x_2$, etc. be the output values at wavelength $\lambda$. The calibration curve is given by

$y = A + B x + C x^2$

where A, B, and C are unknown coefficients. Arbitrary three of the outputs values $x_1$, $x_2$, etc. are substituted into the expression to give rise to simultaneous equations. A formula for solving the simultaneous equations for A, B, C constitutes a mathematical expression according to the invention. Data can be processed by various other methods.

When concentration is found from a calibration curve using two wavelengths, let $\lambda_1$ be one of the wavelength and $\lambda_2$ be the wavelength giving the base line outside the peaks. An intermediate variable is given by

$y_1 = x_1 - x_2$

The concentration is given by

$y = A + B y_1 + C(y_1)^2$

In this way, there exist two mathematical expressions. The mathematical expression referred to herein may take the form

$y = x_2 - \{(\lambda_3 - \lambda_2)x_1 + (\lambda_2 - \lambda_1)x_3\}/(\lambda_3 - \lambda_1)$

This formula is used to find the absorbance proportional to the concentration of a substance of interest in cases where the absorption peak obtained from the substance to be quantified stands on an inclined base line. The mathematical expression is composed of independent variables (or output values obtained from measurements $x_1$, $x_2$, etc., coefficients, dependent variables, arithmetic symbols +, -, *, /, =, parentheses, brackets, braces, indices, $\sqrt{}$, log, etc. The mathematical expression is entered by depressing the keys bearing these symbols in order, i.e., according to the mathematical expression.

More specifically, when the operator starts the CPU, the initial menu appears. Various operation items are displayed together with numerals. The displayed items include item "setting of mathematical expression for processing data". Then, the operator keys in the numeral assigned to this item to provide a display on the CRT as shown in Fig. 2. where k1, •••, k6 are coefficients, and the small hatched area is a cursor. In the illustrated condition, the coefficient k3 can be entered. The cursor can be moved at will by operating the keys. A[ ], B[ ], etc. are located under the coefficients, and A, B, etc. are symbols identifying samples. The independent variable x1, etc. are entered by entering the measured wavelength in the brackets [ ]. As an example, A[320] means output data obtained when a measurement is made on a sample indicated by A at wavelength 320 nm. Displayed under A[ ], etc. are arithmetic symbols. For example, the cursor is shifted into the position next to the position of "k3 = " . Then, numerical key 2000 is depressed. Finally, the input key is depressed. As a result, the CRT provides a display meaning that the coefficient k3 has been set to 2000. Thereafter, the construction of the mathematical expression is started.

As an example, the cursor is first moved into the position of the left parenthesis, and the selected key is depressed. Then, the cursor is moved into the position of k1, and the selected key is depressed. Subsequently, the cursor is moved into the position of * (multiplication), and the selected key is depressed. Thereafter, the cursor is shifted to the position of the sample-identifying symbol A[ ], and the selected key is depressed. As a result, "(k1*A[ ]" is displayed in a horizontally extending frame existing near the lower end of the viewing screen. The program incorporated in the CPU is so constructed that data about a wavelength is always entered after the sample-identifying symbol. Therefore, numerical value 320 indicating a wavelength is entered through the numerical keys. The range of wavelengths is set by entering two values indicating wavelengths with a comma therebetween, e.g., 320, 420. In this manner, the illustrated mathematical expression is entered.

Then, "1. measurement" and "2. correction" are displayed on the screen. If the key 1 is depressed, a measurement is initiated. Then, the sentences "Set sample A. Depress measurement start key." are displayed on the CRT. The operator places sample A in position and depresses the key while following the instructions. The CPU obeys the mathematical expression, sets the wavelength of the spectrophotometer at 320 nm, and receives the output data. Then, the wavelength is shifted to 360 nm, and the output data is again received. Data about A[320] and A[360] corresponding to the first-mentioned $x_1$ and $x_2$ is stored in the data memory. Then, the sentences "Set sample B. Depress measurement start key." are displayed on the viewing screen of the CRT. Data about B[280] is received in the same way as in the above-described step. Calculations are performed, using the formula described above. Again, the sentences "Set sample A. Depress measurement start key." are displayed. In this way, measurements are made on samples A and B. If the sample B is a reference sample, it is the common practice to use the same sample every time. The results are displayed on the CRT as shown in Table 1 and stored in the data memory DM. If the printer P is operated later, then the results are printed out by the printer. Fig. 3 illustrates the sequence of operations.

Table 1

| No. | A[360] | A[320] | B[280] | results |
|-----|--------|--------|--------|---------|
| 1 | 0.345 | 0.628 | 0.432 | 5693 |
| 2 | 0.364 | 0.746 | 0.528 | 5997 |
| 3 | 0.364 | 0.652 | 0.384 | 6108 |
| 4 | 0.355 | 0.621 | 0.403 | 6110 |

In the example described thus far, plural sets of data are obtained from measurements that are made using one or more specified wavelengths, and then the data is processed. Depending on the concentration of a sample, the central wavelength of a peak of the absorption spectrum may shift. Also, when a relatively broad peak of a spectrum rides on an inclined side surface of another large peak, the wavelength of the center of this peak or the wavelength of a minimal value shifts. In this case, the following example can be used to advantage.

Referring to Fig. 4, where the centers of the same absorption peaks obtained from two samples of different concentrations do not agree, if the wavelength is kept at $\lambda_1$, then the height of the peaks for the two samples will be regarded as the same. In this case, therefore, it is necessary to forecast the distance between the centers of the peaks, to scan the wavelength range from $\lambda_s$ to $\lambda_e$, and to find the maximum of the output signal for each sample. For example, when the ratios of individual components of a sample are found by comparing absorption spectra with each other, the scanned wavelength range is set to $\lambda_1 - \lambda_2$, $\lambda_3 - \lambda_4$, $\lambda_5 - \lambda_6$, and so on, corresponding to the first peak, the first minimum, the second peak, the second minimum, etc., of each absorption spectrum. Each range is scanned, and the maximum or minimum of the output data in each range is found (in the case of an absorption spectrum, the output data is absorbance). The found values are given by $x_1$, $x_2$, etc. In this case, two numerical values are inserted into [ ] of A[ ] with a comma between the numerical values. When a minimal value is found, the right parenthesis is followed by o. If this mark exists, the CPU automatically detects the minimal values between the set wavelengths, and uses them as $x_1$ etc. As described already in the above example, the mathematical expression is given by $y_i = x_i$ ($i = 1, 2, \cdots, n$). When the concentration is found using a calibration curve in the same way, or when a calibration curve is prepared using plural reference samples, only one scanned range of wavelengths is specified. In this specified range, the maximal values of output values obtained from plural samples are given by $x_1$, $x_2$, $\cdots$, $x_n$.

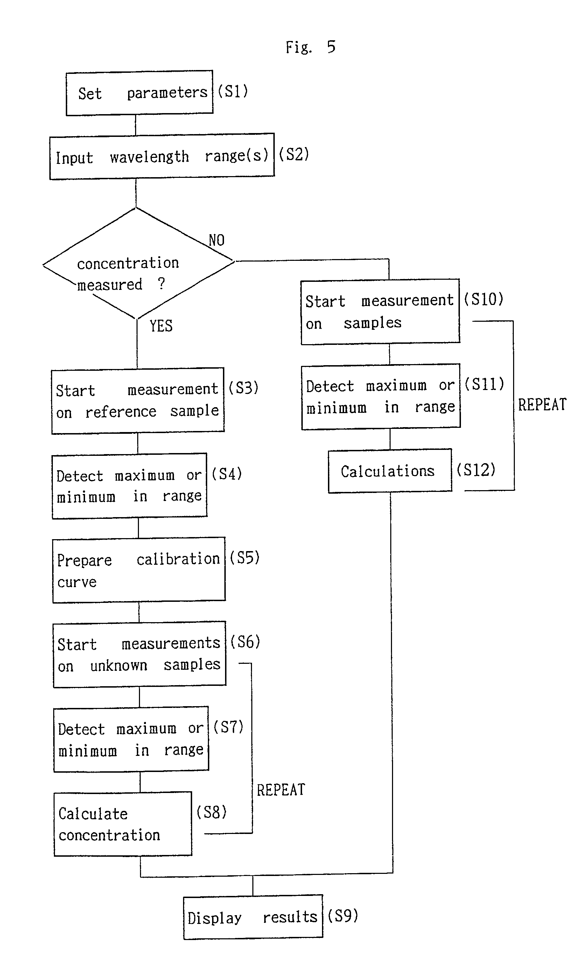

Also in this example, the instrument shown in Fig. 1 is used. Fig. 5 is a flowchart illustrating the operations performed by the data-processing section of this example. First, various parameters for measurements are set (step 1). Then, one or more ranges of wavelengths are set (step 2). Subsequently, a decision is made by the operator to see whether concentration is measured. If so, control goes to step 3 and the following steps. First, a measurement is made (step 3) on a reference sample in the wavelength range set in step 2. The maximum absorbance or the minimum transmittivity is detected from the values obtained from the measurement in the wavelength range (step 4). Then, a calibration curve is prepared by the above-described method (step 5). In this example, a program for preparing a calibration curve has been previously incorporated in the data-processing section and so it is not necessary that the operator enter the program by himself or herself. After the calibration curve has been prepared, a measurement is made on the sample to be investigated within the wavelength range set in step 2 (step 6). Within the wavelength range, the maxima or minima of the output are detected, depending on whether the maximal values or the minimal values were detected in step 4 (step 7). The concentration is calculated, using the calibration curve (step 8). These operations are performed for all the samples to be investigated. The results of the measurements are delivered (step 9). Thus, the sequence of operations is completed. A program for executing the step 7 for calculating the concentration from the results of a measurement on a sample to be investigated with a calibration curve has been incorporated in the data-processing section. This makes it unnecessary for the operator to enter the program. If the result of the decision is NO, then control proceeds from step 2 to steps 10, 11, and 12. A measurement is made on the sample within the wavelength range set in step 2 (step 10). The maximum or minimum of the output in the wavelength range is detected in the same way as in step 4 (step 11). The mathematical expression used in the next step 11 was entered by the operator. The data derived from the measurement is treated according to the mathematical expression (step 11). The steps 10-12 are repeated for all the samples to be investigated. The results of the processing are delivered (step 9), thus completing the sequence of operations.

In the execution of the program illustrated in the flowchart described above, the wavelength range contains one or more wavelengths in step 2. This program can also be applied to the first-mentioned example except for steps 4, 7, and 11.

In accordance with the present invention, the method of processing data is expressed in the form of an ordinary mathematical expression. It is only required for the operator to enter this ordinary mathematical expression as it is. Therefore, it is very easy to set the method of data processing. There is no possibility of erroneous setting. For actual data processing, the CPU has routines for executing individual arithmetic operations, as well as a program that successively selects and combines the routines according to the specified mathematical expression. The CPU constructs a program for processing data from the specified mathematical expression with the above-described program and runs the constructed program. If a program is prepared each time new data is processed, then erroneous preparation would be unavoidable. The present invention enables a mathematical expression to be entered as it is. Consequently, the novel instrument is easy to operate, prevents erroneous entry of the expression, and can easily, quickly, and economically cope with demands for special measurements or analysis.

The operation for preparing a calibration curve is made independent of the operation for calculating concentration using the calibration curve. Programs for carrying out these operations have been previously entered into the data-processing section. The result is that the operator is required to perform much simplified operations in processing data routinely. Additionally, one or more wavelength ranges are set. The maxima or minima of output data within the wavelength ranges are detected. The detected values are used when data is processed. Hence, correct results of analysis can be obtained even if the wavelengths of spectral peaks shift.

## Claims

1. A spectrophotometer comprising:
an input means for entering an arbitrary mathematical expression given by $y = f(x_1, x_2, \cdots, x_n)$
where $x_1, x_2, \cdots, x_n$ are data items obtained from measurements;
a means for storing the entered mathematical expression;
an arithmetic means which performs calculations by substituting data collected from measurements into the mathematical expression; and
an output means for delivering the results of the calculations.

2. A spectrophotometer comprising:
a means for preparing a calibration curve;
a means for calculating concentration from data $(x_1, x_2, \cdots, x_n)$ obtained from measurements, using the calibration curve; an input means for entering an arbitrary mathematical expression given by $y = f(x_1, x_2, \cdots, x_n)$;
a means for storing the entered mathematical expression;
a means which substitutes data collected from measurements into the mathematical expression to perform calculations; and
an output means for delivering the results of the calculations.

3. The spectrophotometer of claim 1 or 2, wherein the data items $x_1, x_2, \cdots, x_n$ are maximal or minimal values obtained by scanning one or more preset wavelength ranges.

Fig. 1

Fig. 2

Fig. 3

| Menu on CRT | Push key bearing desired number |

| Set parameters for measurements | m. exp. set | Displayed routine for setting math. expression(Fig.2) |

meas. started

| Displayed routine for measurement ( Set sample A.   Push start key. | record | To Printer |

Fig. 4

Wavelength

$\lambda s$   $\lambda 1$   $\lambda e$

Fig. 5

Set   parameters (S1)

Input  wavelength  range(s) (S2)

concentration measured ? — NO → Start measurement on samples (S10)

YES

Start   measurement on reference sample (S3)

Detect maximum or minimum in range (S4)

Prepare   calibration curve (S5)

Start   measurements on  unknown  samples (S6)

Detect maximum or minimum in range (S7)

Calculate concentration (S8)

REPEAT

Detect maximum or minimum in range (S11)

Calculations (S12)

REPEAT

Display   results (S9)